# EUROPÄISCHE PATENTSCHRIFT

(11) **EP 3 404 237 B1**
(45) Veröffentlichungstag und Bekanntmachung des Hinweises auf die Patenterteilung: **27.01.2021**
(21) Anmeldenummer: 18167234.6
(22) Anmeldetag: 13.04.2018
(51) Int. Cl.: F02D 41/00, F02B 25/02, F02B 37/18, F02D 13/02, F02D 19/10, F02B 25/14

(54) **VERFAHREN ZUM BETREIBEN EINES GROSSDIESELMOTORS SOWIE GROSSDIESELMOTOR**
LARGE DIESEL ENGINE AND METHOD FOR OPERATING A LARGE DIESEL ENGINE
PROCÉDÉ DE FONCTIONNEMENT D'UN GROS MOTEUR DIESEL AINSI QUE GROS MOTEUR DIESEL

(30) Priorität: 15.05.2017 EP 17171118
(43) Veröffentlichungstag der Anmeldung: 21.11.2018
(73) Patentinhaber: Winterthur Gas & Diesel AG, 8401 Winterthur (CH)
(72) Erfinder: Alder, Roland, 8405 Winterthur (CH)
(74) Vertreter: Intellectual Property Services GmbH

(56) Entgegenhaltungen:
- EP-A1- 0 058 678
- EP-A1- 3 095 993
- EP-A2- 1 956 211
- DE-A1-102014 105 977
- DE-A1-102015 001 049
- US-A- 6 134 888
- US-A1- 2010 077 745

## Beschreibung

Die Erfindung betrifft ein Verfahren zum Betreiben eines Grossdieselmotors, insbesondere eines Dual-Fuel Grossdieselmotors, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in einen Zylinder eingebracht wird, sowie einen Grossdieselmotor gemäss dem Oberbegriff des unabhängigen Patentanspruchs der jeweiligen Kategorie

US6134888 A und EP0058678 A1 beschreiben bekannte Verfahren zum Betreiben eines Grossdieselmotors.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird, oder am Ende deren Einhaltung gar nicht mehr sinnvoll möglich ist.

In der Praxis besteht daher bereits seit langem das Bedürfnis nach sogenannten "Dual-Fuel Motoren", also Motoren, die mit zwei unterschiedlichen Brennstoffen betrieben werden können. In einem Gasmodus wird ein Gas, z.B. ein Erdgas wie LNG (liquefied natural gas), oder ein Gas in Form eines Autogases oder eines anderen zum Antrieb einer Brennkraftmaschine geeigneten Gases verbrannt, während in einem Flüssigmodus ein geeigneter flüssiger Brennstoff wie Benzin, Diesel, Schweröl, Alkohole, Ölderivate und deren Wassergemische, Biotreibstoffe, oder andere geeignete flüssige Brennstoffe in demselben Motor verbrannt werden können. Die Motoren können dabei sowohl Zweitakt- als auch Viertaktmotoren sein, insbesondere auch längsgespülte Zweitakt-Grossdieselmotoren.

Ein Dual-Fuel Grossdieselmotor kann also ausser im Dieselbetrieb, der durch die Selbstzündung des Brennstoffs gekennzeichnet ist, auch in einem Ottobetrieb, der durch die Fremdzündung des Brennstoffs gekennzeichnet ist, betrieben werden. Insbesondere kann die Selbstzündung des Brennstoffs auch zur Fremdzündung eines anderen Brennstoffs genutzt werden.

Im Flüssigmodus wird üblicherweise der Brennstoff direkt in den Brennraum des Zylinders eingebracht und verbrennt dort nach dem Prinzip der Selbstzündung bzw. nach dem Prinzip der Diffusionsverbrennung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Natürlich kann das Luft-Gas-Gemisch auch elektrisch oder auf eine andere an sich bekannte Methode fremdgezündet werden. Ein Dual-Fuel Motor kann während des Betriebs vom Gasmodus in den Flüssigmodus umgeschaltet werden und umgekehrt.

Insbesondere im Gasmodus kommt dem Einstellen des korrekten Verhältnisses von Spülluft zu Gas, dem sogenannte Luft-Gas-Verhältnis oder Luft-Brennstoff-Verhältnis, eine entscheidende Bedeutung zu. Dieses Verhältnis aus Luft zu Brennstoff ist zwar auch im Flüssigmodus bzw. im Dieselbetrieb von Bedeutung, jedoch sind die Auswirkungen eines nicht optimalen Luft-Brennstoffverhältnisses im Gasmodus in der Regel ausgeprägter als im Flüssigmodus.

In einem Grossdieselmotor wird die Spül- oder Ladeluft für die Zylinder üblicherweise von einem Turbolader bereitgestellt, der einen Massenstrom an Spülluft generiert, der unter dem Spülluft- oder Ladedruck zum Einbringen in die Zylinder bereit steht. Der Turbolader, der auch als Abgasturbolader bezeichnet wird, umfasst typischerweise eine Turbine und einen von der Turbine angetriebenen Kompressor, wobei die Turbine mit Abgasen des Grossdieselmotors angetrieben wird. Der Kompressor saugt frische Umgebungsluft an und komprimiert diese zum Bereitstellen der Spülluft. Üblicherweise ist dem Turbolader noch ein Ladeluftkühler nachgeschaltet, um die Spülluft zu kühlen, bevor sie den Zylindern zugeführt wird.

Die von dem Turbolader gelieferte Spülluftmenge bzw. der generierte Ladedruck hängen dabei von der Last des Motors und damit von der Leistung bzw. vom Drehmoment bzw. der Drehzahl des Motors ab. Zudem ist es üblich, die Leistung des Turboladers mit Hilfe eines Abgasventils einzustellen, welches auch als Waste-Gate-Ventil bezeichnet wird. Mit diesem Abgasventil lässt sich der Massenstrom des Abgases einstellen, welcher der Turbine zugeführt wird. Ist das Abgasventil ganz oder teilweise geöffnet, so wird ein Teil des Abgases an der Turbine des Turboladers vorbeigeführt, sodass dieser nicht seine maximal mögliche Leistung erbringt. Ist das Abgasventil komplett geschlossen, so wird der gesamte Massenstrom der Abgase der Turbine des Turboladers zugeführt, sodass der Turbolader dann seine maximal mögliche Leistung erbringt, also den maximal möglichen Massenstrom an Spülluft generiert.

Es ist bekannt, die Einstellung des Abgasventils, und damit den dem Turbolader zum Antrieb zugeführte Massenstrom an Abgasen, in Abhängigkeit von der Last, mit welcher der Grossdieselmotor aktuell betrieben wird, zu verändern. Dabei ist es angestrebt, den vom Turbolader generierten Ladedruck, welches im Wesentlichen der Druck der Luft am Ausgang des Kompressors ist, für den jeweiligen Lastzustand konstant zu halten. Typischerweise nimmt der gewünschte Ladedruck mit zunehmender Last des Motors zu. So wird beispielsweise im unteren Lastbereich ein niedrigerer Ladedruck benötigt als im mittleren oder oberen Lastbereich. Dementsprechend sind in der Motorsteuerung bzw. in der Kontrollvorrichtung für den Grossdieselmotor Daten hinterlegt, welche jeder Last oder jedem Lastbereich des Motors einen Ladedruck zuordnen. Abhängig von der jeweils aktuellen Last wird dann das Abgasventil so eingestellt, dass der Turbolader den gewünschten Ladedruck für die Spülluft bereitstellt.

Insbesondere, wenn der Gasmodus nach dem Otto-Prinzip betrieben wird, ist die korrekte Einstellung des Luft-Gas-Verhältnisses von entscheidender Bedeutung für einen möglichst schadstoffarmen, effizienten und wirtschaftlichen Betrieb des Motors. Ist der Gasanteil zu hoch, so wird das Luft-Gas-Gemisch zu fett. Die Verbrennung des Gemischs erfolgt zu schnell oder zu früh was zu hohen mechanischen Belastungen, zum Klopfen des Motors und zu einer signifikanten Schadstofferhöhung in Abgas führen kann. Da der Verbrennungsprozess dann nicht mehr korrekt auf die Kolbenbewegung im Zylinder abgestimmt ist, führt dies unter anderem auch dazu, dass die Verbrennung teilweise gegen die Bewegung des Kolbens arbeitet.

Auch wenn die korrekte Einstellung des Luft-Gas-Verhältnisses in modernen Grossdieselmotoren unter normalen Betriebsbedingungen keine grösseren Probleme mehr darstellt, so gibt es Betriebsbedingungen, die zu erheblichen Schwierigkeiten führen können.

Mit normalen Betriebsbedingungen sind dabei beispielsweise solche gemeint, auf welche sich die technischen Spezifikationen eines Grossdieselmotors beziehen, wie beispielsweise seine maximale Leistung bei Volllast, seine Schadstoffemission, sein Brennstoffverbrauch usw. Auch die lastabhängige Einstellung des Abgasventils bezieht sich üblicherweise auf die normalen Betriebsbedingungen. Diese technischen Spezifikationen beziehen sich auf Betriebsbedingungen, die in internationalen Normen (ISO) festgelegt sind, beispielsweise in der ISO 3046-1, und beispielsweise auf eine Umgebungstemperatur, genauer gesagt auf eine Ansaugtemperatur, von 25°C.

Häufig ist es aber so, dass der Grossdieselmotor im Gebrauch unter Betriebsbedingungen arbeiten muss, die nicht mehr diesen "normalen" Betriebsbedingungen entsprechen.

Als ein Beispiel seien hier sogenannte tropische Bedingungen genannt, die insbesondere (aber nicht nur) beim Betrieb im Gasmodus Schwierigkeiten verursachen können. Mit tropischen Bedingungen sind dabei solche Umgebungsbedingungen gemeint, die durch eine sehr hohe Temperatur und/oder durch eine sehr hohe relative Luftfeuchtigkeit der Umgebungsluft gekennzeichnet sind, beispielsweise eine Temperatur von mindestens 27°C oder auch über 30°C, oder eine relative Luftfeuchtigkeit von 30%, 40% oder sogar über 60%. Ein Beispiel für tropische Bedingungen sind eine relative Luftfeuchte von 60% und eine Lufttemperatur von 45°C. Unter solchen tropischen Bedingungen ist auch die von dem Turbolader angesaugte Luft zur Bereitstellung der Spülluft für die Zylinder sehr warm und/oder sehr feucht.

Diese warme/feuchte angesaugte Luft kann zu einer deutlichen Reduzierung des Luftmassenstroms im Turbolader führen, weil die warme Luft eine geringere Dichte aufweist und weil die feuchte Luft viel schneller zu Wasserkondensation oder Dampfbildung im Ladeluftkühler führen kann. Dieser reduzierte Massenstrom der Luft kann insbesondere im Gasbetrieb, der ja sehr empfindlich auf das Luft-Gas-Verhältnis reagiert, dazu führen, dass die Gasverbrennung in einen Luftmangelbereich gerät, d.h. das Luft-Gas-Verhältnis im Zylinder sinkt und es kann passieren, dass das Luft-Gas-Gemisch zu fett wird, sodass der Grossdieselmotor in den Bereich der zu schnellen Verbrennung gerät, die zu hohen mechanischen Belastungen oder sehr hohen Schadstoffemissionen führt.

Zudem führt eine hohe Temperatur der Umgebung, bei einem Schiffsmotor ist das typischerweise Meerwasser, in der Regel auch dazu, dass sich die Temperatur des Kühlwassers für den Motor erhöht, und dass sich die Temperatur der den Zylindern zugeführten Spülluft erhöht. Dies kann zur Folge haben, dass sich auch die Temperatur im Brennraum des Zylinders erhöht, wodurch der Grossdieselmotor in den Bereich der zu schnellen Verbrennung mit den damit verbundenen, bereits erwähnten Problemen gerät.

Dieser Problematik widmet sich die vorliegende Erfindung.

Ausgehend von diesem Stand der Technik ist es daher eine Aufgabe der Erfindung, ein Verfahren zum Betreiben eines Grossdieselmotors, insbesondere eines Dual-Fuel Grossdieselmotors, vorzuschlagen, mit welchem der Grossdieselmotor auch bei ungünstigen Umgebungsbedingungen, insbesondere unter den genannten tropischen Bedingungen, mit einem möglichst optimalen Luft-Brennstoff-Verhältnis betrieben werden kann, ohne dass es dabei zu einer signifikanten Erhöhung der Schadstoffemissionen des Grossdieselmotors kommt. Ferner ist es eine Aufgabe der Erfindung, einen entsprechenden Grossdieselmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren vorgeschlagen zum Betreiben eines Grossdieselmotors, insbesondere eines Dual-Fuel Grossdieselmotors, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, bei welchem Verfahren einem Zylinder des Grossdieselmotors zur Erzeugung eines Luft-Brennstoffgemisches Spülluft zugeführt wird, welche von einem Turbolader mit einem Ladedruck bereitgestellt wird, wobei der Turbolader mit Abgasen des Grossdieselmotors angetrieben wird, und zur Bereitstellung der Spülluft Umgebungsluft ansaugt, wobei die Leistung des Turboladers mittels eines Abgasventils veränderbar ist, mit welchem der den Turbolader antreibende Massenstrom des Abgases eingestellt wird, wobei während des Betriebs des Grossdieselmotors ein Kontrollparameter bestimmt wird, der charakteristisch für die Feuchtigkeit der Umgebungsluft ist, und der Wert des Kontrollparameters zur Einstellung des Abgasventils verwendet wird, sodass die Leistung des Turboladers in Abhängigkeit von der Feuchtigkeit der Umgebungsluft verändert wird und wobei ein Auslassventil des Zylinders bei einem vorgebbaren Schliesszeitpunkt zum Beenden des Spülens des Zylinders geschlossen wird, wobei der Wert des Kontrollparameters zur Bestimmung des Schliesszeitpunkts herangezogen wird.

Somit wird die Leistung des Turboladers und damit der zur Verfügung stehende Spülluftstrom sowie der Ladedruck nicht mehr nur in Abhängigkeit von der aktuellen Last des Grossdieselmotors eingestellt, sondern zusätzlich werden über den Kontrollparameter die aktuellen Eigenschaften der Umgebungsluft, insbesondere ihre Feuchtigkeit, berücksichtigt, um so zu gewährleisten, dass ein ausreichender Massenstrom an Spülluft für die Zylinder bereitgestellt wird, um im Brennraum das korrekte Luft-Brennstoff-Verhältnis einzustellen. Wird beispielsweise anhand des Kontrollparameters festgestellt, dass die Umgebungsluft sehr feucht ist, so wird das Abgasventil weiter geschlossen, sodass mehr Abgase der Turbine des Turboladers zugeführt werden, wodurch sich die Leistung des Turboladers erhöht. Dadurch generiert der Turbolader auch bei sehr heisser und sehr feuchter Umgebungsluft einen ausreichenden Massenstrom an Spülluft, um im Brennraum das korrekte Verhältnis aus Luft und Brennstoff zu realisieren, mit welchem der Bereich der schnellen Verbrennung vermieden werden kann.

Erfindungsgemäss wird das Auslassventil des Zylinders bei einem vorgebbaren Schliesszeitpunkt zum Beenden des Spülens des Zylinders geschlossen, wobei der Wert des Kontrollparameters zur Bestimmung des Schliesszeitpunkts herangezogen wird. Neben der Leistung des Turboladers, mit welcher der bereitgestellte Massenstrom an Spülluft durch den Öffnungsgrad des Abgasventils eingestellt wird, dient der Kontrollparameter dann auch dazu, den Schliesszeitpunkt des Auslassventils in Abhängigkeit von den Eigenschaften der Umgebungsluft, beispielsweise ihrer Feuchtigkeit, zu modifizieren.

Insbesondere diese Kombination, nämlich über das Abgasventil den vom Turbolader gelieferten Massenstrom an Spülluft zu modifizieren, und über den Schliesszeitpunkt des Auslassventils das Beenden des jeweiligen Spülvorgangs im Zylinder zu verändern, ist besonders vorteilhaft, um die Eigenschaften der Umgebungsluft ausreichend bei der Einstellung des Luft-Brennstoff-Verhältnisses im Zylinder zu berücksichtigen und den Zustand der schnellen Verbrennung (Luftmangelbereich) zu vermeiden.

Zur Bestimmung des Kontrollparameters ist es eine bevorzugte Massnahme, die Temperatur der vom Turbolader angesaugten Umgebungsluft messtechnisch zu ermitteln.

Eine weitere bevorzugte Massnahme ist es, zusätzlich oder alternativ zur Bestimmung des Kontrollparameters die Feuchtigkeit der vom Turbolader angesaugten Umgebungsluft messtechnisch zu ermitteln.

Noch eine weitere bevorzugte Massnahme ist es, zur Bestimmung des Kontrollparameters die Temperatur der Ladeluft heranzuziehen.

Bezüglich des Abgasventils ist es vorteilhaft, wenn zur Einstellung des Abgasventils ein erster Zusammenhang verwendet wird, welcher die Abhängigkeit des vom Turbolader bereitgestellten Ladedrucks vom Luftmassenstrom angibt, der vom Turbolader generiert wird. Der vom Turbolader generierte Ladedruck - genauer gesagt die Druckdifferenz zwischen der Luft am Ausgang und am Eingang des Kompressors des Turboladers - ändert sich mit dem Massenstrom der Luft, die vom Turbolader bereitgestellt wird. Somit kann mit Hilfe des ersten Zusammenhangs in Abhängigkeit vom Kontrollparameter der jeweils generierte Massenstrom auf den gewünschten Wert eingestellt werden.

Bezüglich der Ansteuerung des Auslassventils ist es vorteilhaft, wenn zur Bestimmung des Schliesszeitpunkts des Auslassventils des Zylinders ein zweiter Zusammenhang verwendet wird, welcher die Abhängigkeit eines Spülgrads von der bereitgestellten Spülluft, dem Schliesszeitpunkt und der Temperatur der Spülluft oder der Umgebungsluft angibt, wobei der Spülgrad das Verhältnis aus dem Volumen an Spülluft im Zylinder und der Summe aus den Volumina an Spülluft und Restgas im Zylinder zum Schliesszeitpunkt ist.

Es ist bekannt, dass in der Spülphase im Zylinder eines Grossdieselmotors, insbesondere eines längsgespülten Zweitakt-Grossdieselmotors, das Restgas, welches vom vorangehenden Verbrennungsprozess resultiert, nicht vollständig über das Auslassventil des Zylinders ausgetragen werden kann, sodass am Ende des Spülvorgangs, also wenn das Auslassventil gerade ganz geschlossen ist, noch ein gewisser Teil an Restgas im Zylinder vorhanden ist. Der Spülgrad gibt dann an, wieviel des Volumens im Zylinder bei gerade geschlossenem Auslassventil von Frischluft, d.h. von Spülluft eingenommen wird. Ein Spülgrad von 80% bedeutet also beispielsweise, dass zum Schliesszeitpunkt des Auslassventils 80% des Volumens im Zylinder (Volumen zwischen Kolbenoberfläche und Zylinderkopf bzw. -deckel) von Frisch- bzw. Spülluft eingenommen werden und 20% von Restgas.

Der zweite Zusammenhang macht also Angaben darüber, wie der Spülgrad vom Schliesszeitpunkt und der zur Verfügung stehenden Spülluft (Massenstrom, Ladedruck, Temperatur) abhängt.

Im Hinblick auf einen möglichst guten Verbrennungsprozess ist es besonders bevorzugt, wenn der Schliesszeitpunkt des Auslassventils so eingestellt wird, dass der Spülgrad im Zylinder mindestens 70%, vorzugsweise mindestens etwa 80% beträgt.

Der erste und/oder der zweite Zusammenhang können in Form einer Lookup-Tabelle bereitgestellt werden. Die Lookup-Tabelle(n) kann/können beispielsweise in der Kontroll- und Steuervorrichtung des Grossdieselmotors gespeichert sein. Dabei enthält die Lookup-Tabelle für den ersten Zusammenhang beispielsweise für verschiedene Werte der Temperatur der Umgebungsluft die Angaben wie sich der vom Turbolader generierte Ladedruck in Abhängigkeit vom geförderten Massenstrom an Luft ändert. Die Lookup-Tabelle für den zweiten Zusammenhang gibt beispielsweise an, wie sich der Spülgrad im Zylinder in Abhängigkeit vom Schliesszeitpunkt des Auslassventils, dem Ladedruck und dem Massenstrom der Spülluft ändert.

Es ist aber auch möglich, den ersten Zusammenhang als funktionalen Zusammenhang oder in Form eines Algorithmus bereitzustellen.

Ferner ist es möglich, den zweiten Zusammenhang als funktionalen Zusammenhang oder in Form eines Algorithmus bereitzustellen

Eine weitere vorteilhafte Variante besteht darin, wenn ein Kompressormodell sowie ein Spülmodell bereitgestellt werden, wobei das Kompressormodell den Zusammenhang des vom Turbolader bereitgestellten Ladedrucks und des vom Turbolader generierten Luftmassenstrom unter Berücksichtigung der Temperatur oder Feuchtigkeit der Umgebungsluft modelliert, wobei das Spülmodell den Zusammenhang des Spülgrads im Zylinder und der bereitgestellten Spülluft, sowie dem Schliesszeitpunkt des Auslassventils unter Berücksichtigung der Temperatur der Ladeluft modelliert, und mit Hilfe des Kompressormodells und des Spülmodells sowohl der Schliesszeitpunkt des Auslassventils, als auch die Einstellung des Abgasventils in Abhängigkeit von dem Wert des Kontrollparameters ermittelt werden. Dabei dient die Einstellung des Abgasventils der Einstellung des Ladedrucks in Abhängigkeit vom Wert des Kontrollparameters.

Bei dieser Variante werden als der Turbolader - und speziell der Kompressor des Turboladers - sowie die Spülung im Zylinder jeweils durch ein Modell abgebildet, mit welchem sich dann für den jeweiligen Wert des Kontrollparameters geeignete Werte für den Öffnungsgrad des Abgasventils und für den Schliesszeitpunkt des Auslassventils ermitteln lassen.

Eine weitere bevorzugte Ausführungsform des Verfahrens besteht darin, dass eine Kompressionsendtemperatur im Zylinder innerhalb eines vorgebbaren Bereichs gehalten wird. Die Kompressionsendtemperatur gibt dabei die Temperatur im Zylinder an, die am Ende der Kompression des Luft-Brennstoffgemisches, also unmittelbar vor dem Zünden des Gemisches im Zylinder herrscht. Ist die Kompressionsendtemperatur zu hoch, so führt dies zu einer nachteiligen verfrühten Zündung des Luft-Brennstoffgemisches. Daher ist es vorteilhaft, die Kompressionsendtemperatur in einem vorgebbaren Bereich zu halten.

Erfindungsgemäss wird ferner ein Grossdieselmotor, insbesondere Dual-Fuel Grossdieselmotor vorgeschlagen, der mit einem erfindungsgemässen Verfahren betrieben wird.

Vorzugsweise ist der Grossdieselmotor als längsgespülter Zweitakt-Grossdieselmotor ausgestaltet.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen näher erläutert.

Bei der folgenden Beschreibung der Erfindung anhand eines Ausführungsbeispiels wird mit beispielhaftem Charakter auf den für die Praxis besonders wichtigen Fall eines Dual-Fuel Grossdieselmotors Bezug genommen, der als längsgespülter Zweitakt-Grossdieselmotor ausgestaltet ist.

Ein Dual-Fuel Grossdieselmotor ist ein Motor, der mit zwei unterschiedlichen Brennstoffen betrieben werden kann. Im speziellen kann der Grossdieselmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl zu einem geeigneten Zeitpunkt direkt in den Brennraum eingespritzt und entzündet sich dort nach dem Diesel-Prinzip der Selbstzündung. Der

Grossdieselmotor kann aber auch in einem Gasmodus betrieben werden, bei dem ein als Brennstoff dienendes Gas, beispielsweise Erdgas, in Form eines Luft-Gas-Gemisches im Brennraum zur Zündung gebracht wird. Im speziellen arbeitet das hier beschriebene Ausführungsbeispiel des Grossdieselmotors im Gasmodus nach einem Niederdruckverfahren, d.h. das Gas wird im gasförmigen Zustand in den Zylinder eingebracht. Mit einem Niederdruckverfahren ist gemeint, dass der Einspritzdruck, mit welchem der gasförmige Brennstoff in den Brennraum des jeweiligen Zylinders eingespritzt wird, höchsten 100 bar (10 MPa) beträgt. Vorzugsweise ist der Einspritzdruck maximal 50 bar (5 MPa) und besonders bevorzugt höchstens 20 bar (2 MPa). Der maximale Einspritzdruck für den gasförmigen Brennstoff kann aber noch kleiner sein, beispielsweise auch nur 15 bar oder sogar noch weniger betragen. Die Vermischung des Gases mit der Luft kann dabei im Zylinder selbst erfolgen oder auch schon vor dem Zylinder. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge flüssiger Brennstoff in den Brennraum oder in eine Vorkammer eingebracht wird, der sich dann selbstentzündet und dadurch die Fremdzündung des Luft-Gas-Gemisches verursacht. Natürlich ist es auch möglich, die Fremdzündung elektrisch oder auf einem anderen Wege zu realisieren.

Der Grossdieselmotor kann sowohl als Viertakt-Motor als auch als Zweitaktmotor ausgestaltet sein. Bei dem hier beschriebenen Ausführungsbeispiel ist der Grossdieselmotor als längsgespülter Zweitakt-Grossdieselmotor ausgestaltet, der zumindest im Flüssigmodus mit einem Common-Rail System arbeitet.

Der Aufbau und die einzelnen Komponenten eines Grossdieselmotors, wie beispielsweise das Einspritzsystem für den Flüssigmodus, das Gaszuführsystem für den Gasmodus, das Gaswechselsystem, welches mindestens ein Auslassventil pro Zylinder umfasst, das Abgassystem oder das Turboladersystem für die Bereitstellung der Spül- bzw. Ladeluft, sowie die Kontroll- und Steuerungssysteme für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung. Der Grossdieselmotor ist als elektronisch gesteuerter Motor ausgestaltet, bei welchem insbesondere das Gaswechselsystem und die Einbringung des jeweiligen Brennstoffs elektronisch gesteuert werden, d.h. die Betätigung der Auslassventile und des Einspritzsystems bzw. des Gaszuführsystems erfolgt mittels elektrischer oder elektronischer Signale von der Kontroll- und Steuervorrichtung des Motors. Diese elektronische Steuerung bietet den Vorteil einer grösstmöglichen Flexibilität, weil solche Betriebsparameter wie der Beginn oder das Ende der Brennstoffzufuhr in die einzelnen Zylinder, oder der Zeitpunkt der Öffnung der Auslassventile oder der Schliesszeitpunkt der Auslassventile frei wählbar sind, und nicht, beispielsweise über eine mechanische Kopplung, an einen bestimmten Kurbelwinkel im Arbeitszyklus gebunden sind.

Bei dem hier beschriebenen Ausführungsbeispiel eines längsgespülten Zweitakt-Grossdieselmotors sind üblicherweise im unteren Bereich eines jeden Zylinders bzw. Zylinderliners Spülluftschlitze vorgesehen, die durch die Bewegung des Kolbens im Zylinder periodisch verschlossen und geöffnet werden, sodass die von dem Turbolader unter einem Ladedruck bereitgestellte Spülluft durch die Spülluftschlitze in den Zylinder einströmen kann, solange diese geöffnet sind. Im Zylinderkopf bzw. im Zylinderdeckel ist ein meistens zentral angeordnetes Auslassventil vorgesehen, durch welches die Verbrennungsgase nach dem Brennprozess aus dem Zylinder in das Abgassystem ausgetragen werden können. Natürlich sind auch Ausgestaltungen möglich, bei welchen für jeden Zylinder mehrere Auslassventile, beispielsweise zwei oder insbesondere vier Auslassventile, vorgesehen sind. Für das Einbringen des flüssigen Brennstoffs sind ein oder mehrere Brennstoffeinspritzdüsen vorgesehen, die beispielsweise im Zylinderkopf in der Nähe des Auslassventils angeordnet sind. Für die Gaszuführung im Gasmodus ist ein Gaszuführsystem vorgesehen, das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens liegt.

Ferner wird im Folgenden beispielhaft auf den Anwendungsfall Bezug genommen, dass der Grossdieselmotor das Antriebsaggregat eines Schiffes ist.

Das erfindungsgemässe Verfahren dient in erster Linie dazu, auch bei solchen Umgebungsbedingungen, die deutlich von den normalen Betriebsbedingungen abweichen, bei denen der Grossdieselmotor üblicherweise getestet wird, und auf die sich die technischen Spezifikationen üblicherweise beziehen, ein optimales Luft-Brennstoff-Verhältnis im Zylinder zu gewährleisten, um insbesondere den eingangs beschriebenen nachteiligen Zustand der schnellen Verbrennung (zu fettes Gemisch) zu vermeiden. Üblicherweise reagiert der Grossdieselmotor im Gasbetrieb deutlich empfindlicher auf ein nicht korrekt eingestelltes Luft-Brennstoff-Verhältnis, deshalb wird im Folgenden mit beispielhaftem Charakter auf den Gasbetrieb eines Dual-Fuel Grossdieselmotors Bezug genommen. Es versteht sich aber, dass das erfindungsgemässe Verfahren in sinngemäss gleicher Weise auch für den Flüssigmodus vorteilhaft eingesetzt werden kann.

Aufgrund der gesetzlichen Bestimmungen bezüglich der Abgaswerte müssen heute Grossdieselmotoren in Küstennähe häufig im Gasmodus betrieben werden, weil sonst die vorgeschriebenen Grenzwerte für den Abgasausstoss, insbesondere sind dies Stickoxide NOₓ und Schwefeloxide, nicht mehr eingehalten werden können.

Im Gasmodus sind die Effizienz und die möglichst schadstoffarme Verbrennung des Luft-Gas-Gemisches empfindlich von dem Verhältnis der Menge an Luft und der Menge an Gas abhängig. Dieses Verhältnis wird üblicherweise durch den λ-Wert angegeben, welcher das Verhältnis aus der Masse der für die Verbrennung zur Verfügung stehenden Luft und der Masse des Gases angibt, welches als Brennstoff verwendet wird.

Das optimale Luft-Gas-Verhältnis hängt von dem vom Motor zu generierenden Antriebsdrehmoment ab und damit von der gewünschten Geschwindigkeit des Schiffes bzw. der Last, mit welcher der Motor betrieben wird.

Das von dem Motor generierten Drehmoment, welches das Schiff antreibt, wird häufig als BMEP (Brake Mean Effective Pressure) Drehmoment angegeben, was im Wesentlichen ein über einen Arbeitszyklus (eine Periode der Kolbenbewegung für Zweitakt-Maschinen und zwei Perioden der Kolbenbewegung für Viertakt-Maschinen) gemitteltes Drehmoment ist.

Für einen effizienten und insbesondere schadstoffarmen Betrieb ist es erwünscht, den Motor bei jeder Last zwischen zwei Grenzkurven zu betreiben, nämlich der Klopfgrenze (knocking limit) und der Zündaussetzgrenze (misfiring-limit). Bei Betriebszuständen, die sich jenseits der Klopfgrenze befinden, ist das Luft-Gas-Gemisch oder allgemeiner das Luft-Brennstoffgemisch zu fett, das heisst es ist zu wenig Luft im Gemisch. Ein zu fettes Gemisch kann zu verschiedenen Problemen führen, nämlich dass die Verbrennung zu schnell abläuft (fast combustion), oder dass der Motor zu klopfen beginnt oder dass das Gemisch im Zylinder dann üblicherweise durch Selbstzündung aufgrund des zu hohen Gehalts an Gas zu früh (bezogen auf den Arbeitszyklus) zu verbrennen beginnt (pre-ignition). Bei Betriebszuständen, die jenseits der Zündaussetzgrenze liegen, ist das Luft-Gas-Gemisch zu mager, das heisst es ist nicht genügend Gas für eine optimale Verbrennung im Brennraum vorhanden.

Daher ist man bemüht, den Grossdieselmotor insbesondere im Gasmodus (aber auch im Flüssigmodus) stets in einem optimalen Bereich für das Luft-Brennstoff-Verhältnis zu betreiben, also in einem Bereich, der zwischen der Klopfgrenze und der Zündaussetzgrenze liegt. Dieser Betrieb wird beispielsweise durch eine Betriebslinie gekennzeichnet, welche den Zusammenhang zwischen dem Luft-Brennstoff-Verhältnis und dem vom Motor generierten Drehmoment angibt. Das Ende dieser Betriebslinie entspricht dem Drehmoment, welches der Grossdieselmotor bei Volllast generiert, also im Volllastbetrieb, in welchem der Grossdieselmotor mit 100% Last betrieben wird. Von dort erstreckt sich die Betriebslinie durch den Teillastbereich (z. B. 50-75% der Volllast) bis hinab zum Niederlastbereich und dem Beginn der Betriebslinie, die dem Leerlaufbetrieb oder dem Stillstand des Motors entspricht. Im Gasmodus wird der Grossdieselmotor beispielsweise mit einem λ-Wert betrieben, der zwischen 2 und 3 liegt, z.B. im Bereich von 2.5.

Wie bereits erwähnt, beziehen sich diese Kurven (Klopfgrenze, Zündaussetzgrenze, Betriebslinie) jeweils auf die ISO-Bedingungen, also die genormten Bedingungen, auf die sich die technischen Spezifikationen des Grossdieselmotors beziehen. So beziehen sich die genannten Kurven insbesondere auf eine Lufttemperatur von 25° C. Mit der Lufttemperatur ist dabei die Temperatur der Ansaugluft gemeint, d. h. die Temperatur der vom Turbolader angesaugten Umgebungsluft. Starke Abweichungen von diesen genormten Bedingungen wie beispielsweise die genannten tropischen Bedingungen, können zu erheblichen Veränderungen der Kurven führen.

Wie bereits erwähnt, wird die den Zylindern zugeführte Spülluft üblicherweise von einem Turbolader generiert, der eine Turbine und einen Kompressor umfasst. Die Turbine wird dabei von Abgasen aus dem Abgassystem des Grossdieselmotors angetrieben und treibt wiederum den Kompressor an, welcher Umgebungsluft ansaugt und diese komprimiert. Die derart generierte Spülluft wird dann üblicherweise durch einen Ladeluftkühler geführt und steht dann für die Zuführung durch die Spülluftschlitze in die Zylinder bereit.

Zur Steuerung oder Regelung der Leistung des Turboladers - und damit des bereitgestellten Massenstroms an Spülluft - ist typischerweise im Abgassystem des Grossdieselmotors ein spezielles Abgasventil vorgesehen, das auch als Waste-Gate-Ventil bezeichnet wird, und mit dem der Massenstrom des Abgases, der dem Turbolader zugeführt wird, einstellbar ist. Ist das Waste-Gate Ventil ganz oder teilweise geöffnet, so wird ein Teil des Abgases am Turbolader vorbeigeführt, sodass dieser nicht seine maximal mögliche Leistung erbringt. Ist das Waste-Gate-Ventil komplett geschlossen, so wird der gesamte Massenstrom des Abgases dem Turbolader zugeführt, der dann mit seiner maximal möglichen Leistung arbeitet, also den maximal möglichen Massenstrom an Spülluft generiert. Die Stellung des Waste-Gate-Ventils bezeichnet die Öffnungsstellung des Waste-Gate-Ventils. Ist das Waste-Gate-Ventil vollständig geöffnet, so wird der maximal mögliche Anteil der Abgase aus den Zylindern am Turbolader vorbei geleitet (minimaler Massenstrom der vom Turbolader generierten Spülluft), ist das Waste-Gate-Ventil vollständig geschlossen, so werden die gesamten Abgase aus den Zylindern an den Turbolader geleitet, sodass dieser seine maximale Leistung bringt, d.h. den maximalen Massenstrom an Spülluft.

Der Ladedruck, der von dem Turbolader generiert wird, ändert sich mit dem Massenstrom der vom Turbolader geförderten Luft. Dieser Zusammenhang ist beispielsweise näherungsweise quadratisch. In der Praxis ist es häufig so, dass die Leistung des Turboladers in Abhängigkeit von der Last des Motors eingestellt wird. So ist beispielsweise in einer Lookup-Tabelle für jede Last oder für jeden Lastbereich des Motors ein Wert des Ladedrucks gespeichert, der dann jeweils eine ausreichende Versorgung der Zylinder mit Spülluft gewährleisten soll, um den Motor unter der Klopfgrenze zu halten. Typischerweise nimmt der benötigte Ladedruck mit der Last des Motors zu. Abhängig von der jeweiligen Last des Motors öffnet oder schliesst dann die Kontroll- und Steuervorrichtung des Motors das Abgasventil so weit, dass am Ausgang des Kompressors der gewünschte Ladedruck generiert wird.

Die jeweilige Einstellung des Ladedrucks - und damit auch des Massenstroms an Spülluft - basiert aber auch auf Werten, die sich auf die "normalen" oder genormten Betriebsbedingungen beziehen, also beispielsweise auf eine Temperatur der angesaugten Umgebungsluft von 25°C. Kommt es nun beispielsweise unter den bereits genannten tropischen Bedingungen zu einem deutlichen Anstieg der Temperatur der Umgebungsluft, so führt dies aufgrund der niedrigeren Dichte der Luft dazu, dass der vom Turbolader generierte Massenstrom an Spülluft nicht mehr ausreicht, um ausreichend Luft für ein korrektes Luft-Brennstoffverhältnis im Zylinder bereitzustellen. Es besteht die Gefahr, dass die Verbrennung im Zylinder in den Luftmangelbereich gerät, was zu dem nachteiligen Effekt der schnellen Verbrennung führt.

Erfindungsgemäss wird deshalb vorgeschlagen, dass während des Betriebs des Grossdieselmotors ein Kontrollparameter bestimmt wird, der charakteristisch für die Temperatur und/oder für die Feuchtigkeit der Umgebungsluft oder der Spülluft ist, und dass der Wert des Kontrollparameters zur Einstellung des Abgasventils verwendet wird, sodass die Leistung des Turboladers in Abhängigkeit von der Temperatur und/oder der Feuchtigkeit der Umgebungsluft verändert wird. Durch diese Massnahme kann sichergestellt werden, dass der Motor immer mit einem optimalen Luft-Brennstoffgemisch betrieben wird.

Dies ist insbesondere auch möglich, wenn der Grossdieselmotorinsbesondere im Gasbetrieb - unter tropischen Bedingungen betrieben wird. Mit tropischen Bedingungen sind dabei solche Bedingungen gemeint, die sich durch eine hohe Temperatur und/oder eine hohe Luftfeuchtigkeit der Umgebungsluft - und damit der vom Turbolader angesaugten Luft - auszeichnen. Mit hoher Temperatur ist damit eine Temperatur von mindestens 27°C gemeint. Unter tropischen Bedingungen kann die Temperatur der Umgebungsluft aber durchaus auch 30°C oder 35°C überschreiten und beispielsweise 45° sein. Mit dieser Temperatur ist die Temperatur der Luft am Eingang des Turboladers gemeint. Unter einer hohen Luftfeuchtigkeit wird eine relative Feuchte der Umgebungsluft von mindestens 40% verstanden, insbesondere von mindestens 50%. Die Luftfeuchtigkeit kann aber durchaus 60% oder noch mehr betragen.

Als Kontrollparameter geeignete Grössen sind beispielsweise die Temperatur der vom Turbolader angesaugten Umgebungsluft, die relative Feuchtigkeit der vom Turbolader angesaugten Umgebungsluft, die aktuelle Temperatur der Ladeluft oder Kombinationen dieser Grössen. Diese Grössen sind entweder bekannt oder können messtechnisch erfasst werden.

Gemäss einer ersten besonders einfachen Ausführungsform wird bei der lastabhängigen Einstellung des Abgasventils zusätzlich der Kontrollparameter und damit die Eigenschaften der Umgebungsluft, insbesondere ihre Temperatur oder Feuchtigkeit, berücksichtigt. Die Einstellung des Abgasventils, und damit die Leistung des Turboladers, erfolgt also nicht nur in Abhängigkeit der jeweiligen Last, bei welcher der Motor betrieben wird, sondern auch in Abhängigkeit der aktuellen Temperatur und/oder Feuchtigkeit der vom Turbolader angesaugten Umgebungsluft. Wird beispielsweise der Grossdieselmotor bei einer konstanten Last, z. B. irgendwo in einem mittleren Lastbereich von 50%-75% der Volllast, betrieben und steigt dann die Temperatur der Umgebungsluft deutlich an, wodurch sich ihre Dichte verringert, so wird das Abgasventil weiter geschlossen, wodurch ein grösserer Massenstrom der Abgase zur Turbine des Turboladers geleitet und dessen Leistung erhöht wird. Hiermit lässt sich sicherstellen, dass trotz der reduzierten Dichte der Umgebungsluft am Ausgang des Kompressors noch ein ausreichender Massenstrom an Spülluft bzw. ein ausreichender Ladedruck bereitgestellt wird.

Die für verschiedene Lastbereiche und für verschiedene Werte des Kontrollparameters jeweils geeignete Stellung des Abgasventils kann beispielsweise in Form einer Lookup-Tabelle in der Kontroll- und Steuervorrichtung des Grossdieselmotors gespeichert bzw. hinterlegt sein.

Gemäss einer anderen bevorzugten Ausführungsform wird zusätzlich zu der temperatur- oder feuchtigkeitsabhängigen Einstellung des Abgasventils auch der Schliesszeitpunkt des Auslassventils, welcher die Beendigung des jeweiligen Spülvorgangs bestimmt, in Abhängigkeit von dem aktuellen Wert des Kontrollparameters eingestellt. Der Schliesszeitpunkt des Auslassventils bestimmt das effektive Kompressionsverhältnis im Zylinder. So kann beispielsweise bei sehr warmer Umgebungsluft und damit wärmerer Spülluft die reduzierte Dichte der Luft durch eine Änderung des Schliesszeitpunkts und damit durch eine Änderung des effektiven Kompressionsverhältnisses kompensiert werden.

Während des Betriebs des Grossdieselmotors wird dann in Abhängigkeit von der Last des Motors und den Eigenschaften der Umgebungsluft, also beispielsweise ihrer Temperatur und/oder ihrer Feuchtigkeit, die Leistung des Turboladers über die Einstellung des Abgasventils und die Beendigung des Spülens des Zylinders über den Schliesszeitpunkt des Auslassventils so eingestellt, dass das Luft-Brennstoffgemisch für die Verbrennung eine optimale Zusammensetzung hat.

Dies ist in einer besonders einfachen Ausführungsform beispielsweise mit einer oder mehreren Lookup-Tabellen möglich, die zwei Zusammenhänge berücksichtigen, nämlich einen ersten Zusammenhang, welcher die Abhängigkeit des vom Turbolader bereitgestellten Ladedrucks vom Luftmassenstrom angibt, der vom Turbolader generiert wird, und einen zweiten Zusammenhang, welcher die Abhängigkeit des Spülgrads im Zylinder von der bereitgestellten Spülluft (Ladedruck und/oder Massenstrom) und dem Schliesszeitpunkt des Auslassventils angibt. Vorzugsweise werden dabei in beiden Zusammenhängen die Eigenschaften der Umgebungsluft, beschrieben durch den Kontrollparameter, und/oder die Temperatur oder die Feuchtigkeit der Spülluft berücksichtigt.

Mit dem Spülgrad im Zylinder ist dabei das Volumenverhältnis aus Frisch- bzw. Spülluft zum Gesamtvolumen im Zylinder zum Schliesszeitpunkt des Auslassventils gemeint. Wenn das Auslassventil gerade ganz geschlossen ist, wird dadurch die Spülung des Zylinders beendet, und die Kompression im Zylinder beginnt. Zu diesem Zeitpunkt wird durch die Oberseite des Kolbens, die Zylinderwandung und den Zylinderdeckel oder-kopf ein bestimmtes Volumen im Zylinder begrenzt, das vorangehend (und nachfolgend) mit dem Begriff "Gesamtvolumen" gemeint ist. Dieses Gesamtvolumen ist jedoch typischerweise nicht vollständig mit frischer Spülluft gefüllt. Denn auch wenn man während des Spülens des Zylinders ein ausreichend grosses Füllvolumen an frischer Spülluft durch die Spülluftschlitze in den Zylinder einbringt, das beispielsweise mindestens gleich gross aber typischerweise grösser ist als das Gesamtvolumen, so kann das Gesamtvolumen üblicherweise nicht vollständig mit frischer Spülluft gefüllt werden, weil ein Teil der frisch zugeführten Spülluft zusammen mit dem auszutragenden Restgas, das von der letzten Verbrennung im Zylinder stammt, durch das Auslassventil ausströmt.

Folglich ist üblicherweise zum Schliesszeitpunkt des Auslassventils, welcher die Spülung beendet, noch eine gewisse Menge an Restgas, also von der vorangehenden Verbrennung resultierendes Gas, im Gesamtvolumen des Zylinders vorhanden.

Der Spülgrad gibt dann den prozentualen Anteil des Gesamtvolumens an, der zum Schliesszeitpunkt des Auslassventils mit frischer Spülluft gefüllt ist. Da sich das Gesamtvolumen aus dem mit Spülluft gefüllten Volumen und dem mit Restgas gefüllten Volumen zusammensetzt, ist der Spülgrad durch den Quotienten aus Volumen an Spülluft und der Summe der Volumina an Spülluft und Restgas bestimmt, oder, was gleichbedeutend ist, durch den Quotienten aus Spülluftvolumen und Gesamtvolumen zum Schliesszeitpunkt des Auslassventils. Der Spülgrad wird üblicherweise in Prozent angegeben.

Der Spülgrad ist somit abhängig vom Ladedruck, vom Schliesszeitpunkt des Auslassventils und von der Temperatur. Da der Ladedruck wiederum - wie oben anhand des ersten Zusammenhangs erwähnt - vom Massenstrom der vom Turbolader bereitgestellten Luft abhängt, ist auch der Spülgrad - zumindest über den Ladedruck - von dem Massenstrom der Spülluft abhängig.

Mit Hilfe des ersten Zusammenhangs, des zweiten Zusammenhangs und des aktuellen Werts des Kontrollparameters lässt sich dann für die jeweils aktuellen Eigenschaften der Umgebungsluft (Temperatur, Feuchtigkeit) ein Wert für den Schliesszeitpunkt des Auslassventils ermitteln, mit welchem ein Spülgrad realisiert wird, welcher eine optimale Verbrennung im Zylinder ermöglicht und insbesondere eine schnelle Verbrennung oder ein zu fettes Luft-Brennstoffgemisch verhindert.

Vorzugsweise wird der Schliesszeitpunkt des Auslassventils so eingestellt, dass der Spülgrad im Zylinder mindestens 70% und vorzugsweise etwa 80% oder mindestens 80% beträgt.

Die Anpassung des Schliesszeitpunkts kann insbesondere auch dazu verwendet werden, um die Kompressionsendtemperatur im Zylinder innerhalb eines vorgebbaren Bereichs zu halten, und damit beispielsweise eine verfrühte Zündung des Luft-Brennstoffgemisches im Zylinder zu vermeiden.

Die vom jeweiligen Wert des Kontrollparameters und von der jeweiligen Last des Motors abhängigen Werte für die Einstellung des Abgasventils und für den Schliesszeitpunkt des Auslassventils können beispielsweise als Lookup-Tabelle hinterlegt sein, z.B. in der Kontroll- und Steuervorrichtung des Grossdieselmotors. Eine solche Lookup-Tabelle kann beispielsweise eine mehrdimensionale Tabelle oder Matrix sein, in welcher verschiedenen Kombinationen aus Last, bei welcher der Motor betrieben wird, und Wert des Kontrollparameters jeweils ein Wert für die Einstellung des Abgasventils und für den Schliesszeitpunkt des Auslassventils zugeordnet wird. Anhand der aktuellen Werte für den Kontrollparameter und der aktuellen Last, bei welcher der Motor betrieben wird, entnimmt die Kontroll- und Steuervorrichtung des Motors der Lookup-Tabelle die Werte für die Einstellung des Abgasventils und für den Schliesszeitpunkt des Auslassventils und steuert das Abgasventil sowie die Auslassventile gemäss dieser Werte an.

Es ist aber auch möglich, mit Hilfe des ersten und des zweiten Zusammenhangs einen funktionalen Zusammenhang oder einen Algorithmus bereitzustellen, welcher als Eingangsgrössen den Wert des Kontrollparameters und die Last des Motors hat, und welcher als Ausgangsgrössen die jeweils geeigneten Werte für die Einstellung des Abgasventils und für den Schliesszeitpunkt der Auslassventile liefert.

Die Werte in der Lookup-Tabelle oder der Algorithmus können dabei anhand von empirischen Daten, Simulation- oder Modellrechnungen, Testläufen, Berechnungen oder Kombinationen dieser festgelegt werden.

Eine weitere Möglichkeit besteht darin, die Spülung im Zylinder und/oder den Turbolader zu modellieren bzw. durch ein Modell abzubilden. Dazu kann beispielsweise ein Spülmodell und/oder ein Kompressormodell erstellt werden. Das Kompressormodell bildet den Zusammenhang des vom Turbolader bereitgestellten Ladedrucks und des vom Turbolader generierten Luftmassenstrom unter Berücksichtigung des Kontrollparameters, insbesondere der Temperatur oder Feuchtigkeit der Umgebungsluft ab. Das Spülmodell bildet den Zusammenhang zwischen dem Spülgrad im Zylinder, der bereitgestellten Spülluft, sowie dem Schliesszeitpunkt des Auslassventils unter Berücksichtigung des Kontrollparameters, insbesondere der Temperatur oder Feuchtigkeit der Spülluft, ab. Mit Hilfe des Kompressormodells und des Spülmodells wird dann sowohl der Schliesszeitpunkt des Auslassventils, als auch die Einstellung des Abgasventils in Abhängigkeit von dem Wert des Kontrollparameters ermittelt. Natürlich können das Spülmodell und das Kompressormodell auch zu einem Gesamtmodell zusammengefasst werden.

Das erfindungsgemässe Verfahren ist insbesondere auch zur Nachrüstung eines Grossdieselmotors und insbesondere zur Nachrüstung eines Dual-Fuel Grossdieselmotors geeignet. Da sich das erfindungsgemässe Verfahren ohne oder ohne grösseren zusätzlichen apparativen Aufwand realisieren lässt, ist es insbesondere auch dafür geeignet, bereits existierende Grossdieselmotoren umzurüsten bzw. nachzurüsten, damit diese auch unter ungünstigen Umgebungsbedingungen, insbesondere unter tropischen Bedingungen, effizient, sicher umweltfreundlich und wirtschaftlich betrieben werden können.

## Patentansprüche

1. Verfahren zum Betreiben eines Grossdieselmotors, insbesondere eines Dual-Fuel Grossdieselmotors, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, bei welchem Verfahren einem Zylinder des Grossdieselmotors zur Erzeugung eines Luft-Brennstoffgemisches Spülluft zugeführt wird, welche von einem Turbolader mit einem Ladedruck bereitgestellt wird, wobei der Turbolader mit Abgasen des Grossdieselmotors angetrieben wird, und zur Bereitstellung der Spülluft Umgebungsluft ansaugt, wobei die Leistung des Turboladers mittels eines Abgasventils veränderbar ist, mit welchem der den Turbolader antreibende Massenstrom des Abgases eingestellt wird, **dadurch gekennzeichnet, dass** während des Betriebs des Grossdieselmotors ein Kontrollparameter bestimmt wird, der charakteristisch für die Feuchtigkeit der Umgebungsluft ist, und der Wert des Kontrollparameters zur Einstellung des Abgasventils verwendet wird, sodass die Leistung des Turboladers in Abhängigkeit von der Feuchtigkeit der Umgebungsluft verändert wird, und wobei ein Auslassventil des Zylinders bei einem vorgebbaren Schliesszeitpunkt zum Beenden des Spülens des Zylinders geschlossen wird, wobei der Wert des Kontrollparameters zur Bestimmung des Schliesszeitpunkts herangezogen wird.

2. Verfahren nach Anspruch 1, bei welchem zur Bestimmung des Kontrollparameters die Temperatur der vom Turbolader angesaugten Umgebungsluft messtechnisch ermittelt wird.

3. Verfahren nach einem der vorangehenden Ansprüche, bei welchem zur Bestimmung des Kontrollparameters die Feuchtigkeit der vom Turbolader angesaugten Umgebungsluft messtechnisch ermittelt wird.

4. Verfahren nach einem der vorangehenden Ansprüche, bei welchem zur Bestimmung des Kontrollparameters die Temperatur der Ladeluft herangezogen wird.

5. Verfahren nach einem der vorangehenden Ansprüche, bei welchem zur Einstellung des Abgasventils ein erster Zusammenhang verwendet wird, welcher die Abhängigkeit des vom Turbolader bereitgestellten Ladedrucks vom Luftmassenstrom angibt, der vom Turbolader generiert wird.

6. Verfahren nach einem der Ansprüche 2-5, bei welchem zur Bestimmung des Schliesszeitpunkts des Auslassventils des Zylinders ein zweiter Zusammenhang verwendet wird, welcher die Abhängigkeit eines Spülgrads von der bereitgestellten Spülluft, dem Schliesszeitpunkt und der Temperatur der Spülluft oder der Umgebungsluft angibt, wobei der Spülgrad das Verhältnis aus dem Volumen an Spülluft im Zylinder und der Summe aus den Volumina an Spülluft und Restgas im Zylinder zum Schliesszeitpunkt ist.

7. Verfahren nach Anspruch 6, bei welchem der Schliesszeitpunkt des Auslassventils so eingestellt wird, dass der Spülgrad im Zylinder mindestens 70%, vorzugsweise mindestens etwa 80% beträgt.

8. Verfahren nach einem der Ansprüche 5-7, wobei der erste und/oder der zweite Zusammenhang in Form einer Lookup-Tabelle bereitgestellt wird.

9. Verfahren nach einem der Ansprüche 5-8, wobei der erste Zusammenhang als funktionaler Zusammenhang oder in Form eines Algorithmus bereitgestellt wird.

10. Verfahren nach einem der Ansprüche 6-9, bei welchem der zweite Zusammenhang als funktionaler Zusammenhang oder in Form eines Algorithmus bereitgestellt wird.

11. Verfahren nach einem der vorangehenden Ansprüche, bei welchem ein Kompressormodell sowie ein Spülmodell bereitgestellt werden, wobei das Kompressormodell den Zusammenhang des vom Turbolader bereitgestellten Ladedrucks und des vom Turbolader generierten Luftmassenstrom unter Berücksichtigung der Temperatur oder Feuchtigkeit der Umgebungsluft modelliert, wobei das Spülmodell den Zusammenhang des Spülgrads im Zylinder und der bereitgestellten Spülluft, sowie dem Schliesszeitpunkt des Auslassventils unter Berücksichtigung der Temperatur der Ladeluft modelliert, und wobei mit Hilfe des Kompressormodells und des Spülmodells sowohl der Schliesszeitpunkt des Auslassventils, als auch die Einstellung des Abgasventils in Abhängigkeit von dem Wert des Kontrollparameters ermittelt werden.

12. Verfahren nach einem der vorangehenden Ansprüche, bei welchem eine Kompressionsendtemperatur im Zylinder innerhalb eines vorgebbaren Bereichs gehalten wird.

13. Grossdieselmotor, insbesondere Dual-Fuel Grossdieselmotor, betrieben mit einem Verfahren gemäss einem der Ansprüche 1-12.

14. Grossdieselmotor nach Anspruch 13, ausgestaltet als längsgespülter Zweitakt-Grossdieselmotor.

## Claims

1. A method for operating a large diesel engine, in particular a dual-fuel large diesel engine, which can be operated in a liquid mode in which mode a liquid fuel is introduced into a cylinder for combustion and which dual-fuel large diesel engine can also be operated in a gas mode in which mode a gas is introduced as fuel into a cylinder, in which method scavenging air is supplied to a cylinder of the large diesel engine for producing an air-fuel mixture, which scavenging air is provided by a turbocharger with a charging pressure, wherein the turbocharger is driven by exhaust gases from the large diesel engine and wherein the turbocharger sucks in ambient air for providing the scavenging air, wherein the power of the turbocharger can be changed by means of an exhaust valve, with which the mass flow of the exhaust gas driving the turbocharger is adjusted, **characterized in that** a control parameter is determined during operation of the large diesel engine, which control parameter is characteristic of the humidity of the ambient air, and that the value of the control parameter is used to adjust the exhaust valve, so that the power of the turbocharger is changed depending on the humidity of the ambient air, and wherein an outlet valve of the cylinder is closed at a predeterminable closing time to complete the scavenging of the cylinder, wherein the value of the control parameter is used to determine the closing time.

2. A method according to claim 1, wherein the temperature of the ambient air sucked in by the turbocharger is determined by measurement to determine the control parameter.

3. A method according to anyone of the preceding claims, wherein the humidity of the ambient air sucked in by the turbocharger is determined by measurement to determine the control parameter.

4. A method according to anyone of the preceding claims, wherein the temperature of the charging air is used to determine the control parameter.

5. A method according to anyone of the preceding claims, wherein a first interrelationship is used to adjust the exhaust valve, which interrelationship indicates the dependence of the charging pressure provided by the turbocharger on the air mass flow generated by the turbocharger.

6. A method according to anyone of the claims 2 to 5, wherein a second interrelationship is used to determine the closing timing of the outlet valve of the cylinder, which interrelationship indicates the dependence of a degree of scavenging on the scavenging air provided, the closing time and the temperature of the scavenging air or of the ambient air, wherein the degree of scavenging is the ratio of the volume of scavenging air in the cylinder and the sum of the volumes of scavenging air and residual gas in the cylinder at the closing time.

7. A method according to claim 6, wherein the closing time of the outlet valve is adjusted in such a way that the degree of scavenging in the cylinder is at least 70%, preferably at least about 80%.

8. A method according to anyone of the claims 5 to 7, wherein the first and/or the second interrelationship is provided in the form of a lookup table.

9. A method according to anyone of the claims 5 to 8, wherein the first interrelationship is provided as a functional interrelationship or in the form of an algorithm.

10. A method according to anyone of the claims 6 to 9, wherein the second interrelationship is provided as a functional interrelationship or in the form of an algorithm.

11. A method according to anyone of the preceding claims, wherein a compressor model and a scavenging model are provided, wherein the compressor model models the interrelationship between the charging pressure provided by the turbocharger and the air mass flow generated by the turbocharger, considering the temperature or humidity of the ambient air, wherein the scavenging model models the interrelationship between the degree of scavenging in the cylinder and the scavenging air provided and the closing time of the outlet valve, considering the temperature of the charging air, and wherein by means of the compressor model and the scavenging model, both the closing time of the outlet valve and the adjusting of the exhaust valve are determined depending on the value of the control parameter.

12. A method according to anyone of the preceding claims, wherein a final compression temperature in the cylinder is maintained within a predeterminable range.

13. A large diesel engine, in particular a dual-fuel large diesel engine, operated by a method according to anyone of the claims 1 to 12.

14. A large diesel engine according to claim 13, designed as a longitudinally scavenged two-stroke large diesel engine.

## Revendications

1. Un procédé pour faire fonctionner un gros moteur diesel, en particulier un gros moteur diesel bi-carburant, qui peut fonctionner en un mode liquide, dans lequel un carburant liquide est introduit dans un cylindre pour la combustion, et qui peut aussi fonctionner en un mode gazeux, dans lequel un gaz est introduit comme carburant dans le cylindre, dans lequel procédé de l'air de purge est alimenté à un cylindre du gros moteur diesel pour générer un mélange air-carburant, ledit air de purge est fourni par un turbocompresseur avec une pression de charge, dans lequel le turbocompresseur est entraîné par les gaz d'échappement du gros moteur diesel et ledit turbocompresseur aspire l'air ambiant pour fournir l'air de purge, dans lequel la puissance du turbocompresseur peut être changée au moyen d'une soupape d'échappement, avec laquelle le débit massique des gaz d'échappement entraînant le turbocompresseur est réglé, **caractérisé en ce qu'**un paramètre de contrôle est déterminé pendant le fonctionnement du grand moteur diesel, ledit paramètre de contrôle est caractéristique de l'humidité de l'air ambiant, et que la valeur du paramètre de contrôle est utilisée pour régler la soupape d'échappement, de sorte que la puissance du turbocompresseur est changée en fonction de l'humidité de l'air ambiant, et dans lequel une soupape de sortie du cylindre est fermée à un moment de fermeture prédéterminable pour terminer la purge du cylindre, dans lequel la valeur du paramètre de contrôle est utilisée pour déterminer le moment de fermeture.

2. Un procédé selon la revendication 1, dans lequel la température de l'air ambiant aspiré par le turbocompresseur est déterminée par mesure pour déterminer le paramètre de contrôle.

3. Un procédé selon l'une des revendications précédentes, dans lequel l'humidité de l'air ambiant aspiré par le turbocompresseur est déterminée par mesure pour déterminer le paramètre de contrôle.

4. Un procédé selon l'une des revendications précédentes, dans lequel la température de l'air de charge est utilisée pour déterminer le paramètre de contrôle.

5. Un procédé selon l'une des revendications précédentes, dans lequel une première relation est utilisée pour régler la soupape d'échappement, ladite relation indique la dépendance de la pression de charge fournie par le turbocompresseur sur le débit massique d'air généré par le turbocom presseur.

6. Un procédé selon l'une des revendications 2 à 5, dans lequel une deuxième relation est utilisée pour déterminer le moment de fermeture de la soupape de sortie du cylindre, ladite relation indique la dépendance d'un degré de purge par rapport à l'air de purge fourni, le moment de fermeture et la température de l'air de purge ou de l'air ambiant, dans lequel le degré de purge est le rapport du volume d'air de purge dans le cylindre et la somme des volumes d'air de purge et de gaz résiduel dans le cylindre au moment de la fermeture.

7. Un procédé selon la revendication 6, dans lequel le moment de fermeture de la soupape de sortie est réglé de telle sorte que le degré de purge dans le cylindre est au moins 70 %, de préférence au moins 80 % environ.

8. Un procédé selon l'une des revendications 5 à 7, dans lequel la première et/ou la deuxième relation est fournie sous la forme d'un tableau de correspondance.

9. Un procédé selon l'une des revendications 5 à 8, dans lequel la première relation est fournie comme une relation fonctionnelle ou sous la forme d'un algorithme.

10. Un procédé selon l'une des revendications 6 à 9, dans lequel la deuxième relation est fournie comme une relation fonctionnelle ou sous la forme d'un algorithme.

11. Un procédé selon l'une des revendications précédentes, dans lequel un modèle de compresseur et un modèle de purge sont fournis, dans lequel le modèle de compresseur modélise la relation entre la pression de charge fournie par le turbocompresseur et le débit massique d'air généré par le turbocompresseur, en considérant la température ou l'humidité de l'air ambiant, dans lequel le modèle de purge modélise la relation entre le degré de purge dans le cylindre et l'air de purge fourni et le moment de fermeture de la soupape de sortie, en considérant la température de l'air de charge, et dans lequel, au moyen du modèle de compresseur et du modèle de purge, tant le moment de fermeture de la soupape de sortie que le réglage de la soupape d'échappement sont déterminés en fonction de la valeur du paramètre de contrôle.

12. Un procédé selon l'une des revendications précédentes, dans lequel une température de compression finale dans le cylindre est maintenue dans une plage prédéterminable.

13. Un gros moteur diesel, en particulier un gros moteur diesel bi-carburant, qui fonctionne avec un procédé selon l'une des revendications 1 à 12.

14. Un gros moteur diesel selon la revendication 13, conçu comme un gros moteur diesel à deux temps purgé longitudinalement.
